# EUROPEAN PATENT SPECIFICATION

(11) **EP 2 662 409 B1**
(45) Date of publication and mention of the grant of the patent: **05.04.2017**
(21) Application number: 11855009.4
(22) Date of filing: 27.12.2011
(51) Int. Cl.: C08L 27/16, C08J 3/24, C08L 27/18

(54) **FLUORINE RUBBER MOLDED ARTICLE**
FLUORKAUTSCHUK-FORMKÖRPER
ARTICLE MOULÉ EN CAOUTCHOUC FLUORÉ

(30) Priority: 05.01.2011 JP 2011000850
(43) Date of publication of application: 13.11.2013
(73) Proprietor: Daikin Industries, Ltd., Osaka 530-8323 (JP)
(72) Inventor: TAKEMURA Kouhei, Osaka-Shi, Osaka 530-8323 (JP); YANAGIGUCHI Tomihiko, Osaka-Shi, Osaka 530-8323 (JP)
(74) Representative: Hoffmann Eitle
(86) International application number: PCT/JP2011/080287
(87) International publication number: WO 2012/093624

(56) References cited:
- WO-A1-2011/002080
- JP-A- 2001 131 346
- JP-A- 2002 144 484
- JP-A- 2003 096 438

## Description

### TECHNICAL FIELD

The present invention relates to a fluororubber molded article.

### BACKGROUND ART

Fluororubber is widely used in a variety of industries including the auto industry, the semiconductor industry, and the chemical industry because of its excellent chemical resistance, solvent resistance, and heat resistance. Specifically, in the auto industry, it is used, for example, for hoses and seal members for engines and peripherals thereof, automatic transmissions, fuel systems and peripherals thereof, and the like.

However, some types of fluororubber such as propylene (P)-tetrafluoroethylene (TFE) copolymer rubber may embrittle at low temperatures. Therefore, to overcome this problem, it has been previously proposed to add an ethylene (Et)-TFE copolymer resin (ETFE) having a melting point of 240 to 300°C to such a rubber, melt-knead them, and then perform radiation crosslinking or peroxide crosslinking (Patent Literature 1).

Additionally, Patent Literature 2 discloses a method for producing a crosslinked rubber with improved thermal strength, which includes press-crosslinking a fluororubber composition containing a fluororubber (vinylidene fluoride (VdF)-based rubber), a fluororesin (ETFE), and a fluorinated thermoplastic elastomer (at 160°C for 10 minutes), and crosslinking the composition in an oven (at 180°C for 4 hours).

Patent Literature 3 discloses a fluorinated copolymer composition containing 75 to 98 % by weight of a fluorinated elastomer and 25 to 2 % by weight of a fluororesin both of which have reaction sites capable of reacting with a common peroxide-based crosslinking agent.

Patent Literature 4 discloses a rubber molded article including a polyol-crosslinkable fluororubber and a polyol crosslinkable fluororesin.

In the industries relating to sealing materials and the like, for example, the following strategies have been proposed to reduce the friction coefficient of rubber while maintaining its performance: stacking a fluororesin layer (or a fluororesin fiber layer) on the rubber surface (Patent Literatures 5 and 6) ; and forming a coating of a fluororesin on the rubber surface (Patent Literature 7).

Patent Literature 8 describes that a crosslinkable fluororubber composition prepared by kneading a fluororesin and a fluororubber containing vinylidene fluoride units at a temperature of not less than a temperature being lower by 5°C than the melting point of the fluororesin can be formed into a low-friction fluororubber molded article having an increased ratio of fluororesin on the surface of the molded article by molding and crosslinking, and then heating the composition to a temperature of not lower than the melting point of the fluororesin.

### CITATION LIST

### - Patent Literature

Patent Literature 1: JP-A S50-32244
Patent Literature 2: JP-A H06-25500
Patent Literature 3: JP-A 2000-230096
Patent Literature 4: JP-A 2001-131346
Patent Literature 5: JP-A H07-227935
Patent Literature 6: JP-A 2000-313089
Patent Literature 7: JP-A 2006-292160
Patent Literature 8: WO 2010/029899

### SUMMARY OF INVENTION

### - Technical Problem

Yet, the techniques to obtain a molded article using a . mixture of a fluororubber and a fluororesin taught in Patent Literatures 1 to 4 have room for improvement because molded articles produced by these techniques are not satisfactory in terms of low friction properties and water repellency.

In addition, although the techniques of forming a fluororesin layer on the surface of a rubber by stacking or coating as taught in Patent Literatures 5 to 7 provide molded articles having low friction properties and water repellency that are attributed to fluororesin on the surface, there exists a great need to increase the adhesion strength at the interface between the fluororubber and the fluororesin. Currently, developing a strategy to meet this need is a challenging task.

In the case where a fluororubber molded article is obtained from a crosslinkable fluororubber composition prepared by kneading a fluororubber and a fluororesin at a temperature of not less than a temperature being lower by 5°C than the melting point of the fluororesin as taught in Patent Literature 8, the ratio of fluororesin on the surface of the fluororubber molded article may not be sufficiently increased. Therefore, there is room for improvement in terms of low friction properties and water repellency.

An object of the present invention is to provide a fluororubber molded article with low friction properties and water repellency without the need to stack or coat a fluororesin layer on the rubber surface.

### - Solution to Problem

The present invention provides a fluororubber molded article produced by peroxide-crosslinking or polyol-crosslinking a crosslinkable composition containing a fluororubber (A) and a fluororesin (B), wherein the fluororubber molded article has a surface with projecting portions, an area ratio of areas having the projecting portions to the entire surface of the fluororubber molded article is not less than 0.06, a volume ratio of the fluororesin (B) to the fluororubber molded article is 0.05 to 0.45, the area ratio of the areas having the projecting portions is 1.2 times or more larger than the volume ratio of the fluororesin (B), and the fluororesin (B) is a tetrafluoroethylene/hexafluoropropylene copolymer.

Preferably, the projecting portions are substantially formed of the fluororesin (B) that is a component of the crosslinkable composition.

Preferably, the projecting portions have a height of 0.2 to 5.0 µm and a standard deviation of the height of not more than 0.300.

Preferably, the projecting portions have a bottom with a cross-sectional area of 2 to 500 µm².

Preferably, the number of the projecting portions of the fluororubber molded article of the present invention is 3000 to 60000 per mm².

Preferably, the fluororubber (A) contains at least one selected from the group consisting of vinylidene fluoride/hexafluoropropylene copolymers, vinylidene fluoride/hexafluoropropylene/tetrafluoroethylene copolymers, tetrafluoroethylene/propylene copolymers, tetrafluoroethylene/propylene/vinylidene fluoride copolymers, ethylene/hexafluoropropylene copolymers, ethylene/hexafluoropropylene/vinylidene fluoride copolymers, ethylene/hexafluoropropylene/tetrafluoroethylene copolymers, vinylidene fluoride/tetrafluoroethylene/perfluoro(alkyl vinyl ether) copolymers, and vinylidene fluoride/chlorotrifluoroethylene copolymers.

Preferably, the fluororubber molded article of the present invention is a sealing material.

Preferably, the fluororubber molded article of the present invention is a slide member.

Preferably, the fluororubber molded article of the present invention is a non-adhesive member.

Preferably, the surface of the fluororubber molded article of the present invention is water and oil repellent.

### - Advantageous Effects of Invention

Because the fluororubber molded article of the present invention contains a fluororubber (A) and a fluororesin (B), and has a lot of projecting portions on the surface, it has excellent chemical resistance, heat resistance, and low transmittance that are attributed to the fluororubber and the fluororesin, and exhibits excellent low friction properties and water repellency compared to conventional molded articles made only of a fluororubber while maintaining high flexibility that is attributed to the fluororubber.

### BRIEF DESCRIPTION OF DRAWINGS

Fig. 1 (a) is a perspective view schematically showing the shapes of projecting portions of a fluororubber molded article, Fig. 1 (b) is a cross-sectional view of a projecting portion 31 taken along a plane containing lines B1 and B2 which are perpendicular to the surface shown in Fig. 1(a), and Fig. 1(c) is a cross-sectional view taken along a plane containing lines C1 and C2 which are parallel to the surface shown in Fig. 1(a) ;
Fig. 2 is a graph showing the numbers of projecting portions of the respective projecting portion height ranges on the surface of the molded article obtained in Example 1;
Fig. 3 is a graph showing the numbers of projecting portions of the respective projecting portion height ranges on the surface of the molded article obtained in Comparative Example 1;
Fig. 4 is an image obtained by laser microscopic analysis of the surface of the molded article obtained in Example 1; and
Fig. 5 is an image obtained by laser microscopic analysis of the surface of the molded article obtained in Comparative Example 1.

### DESCRIPTION OF EMBODIMENTS

Because of the presence of a lot of projecting portions uniformly arranged on the surface, the fluororubber molded article of the present invention exhibits excellent low friction properties and high water repellency. Preferably, the projecting portions are substantially formed of the fluororesin (B) that is a component of the crosslinkable composition. The projecting portions can be formed, for example, by a method described below in which the fluororesin (B) in the crosslinkable composition is deposited on the surface.

There is no clear interface where the main body of the fluororubber molded article of the present invention and the projecting portions meet, in other words, the projecting portions are integrated parts of the fluororubber molded article. This structure has an advantage of more certainly preventing projecting portions from coming off or chipping off.

The fact that the projecting portions are substantially formed of the fluororesin (B) contained in the crosslinkable composition is supported by the ratio between peaks derived from the fluororubber (A) and the fluororesin (B). The peak ratio can be obtained by IR analysis or ESCA analysis. More specifically, the ratio between the characteristic absorption peak derived from the fluororubber (A) and the characteristic absorption peak derived from the fluororesin (B) (peak ratio of components = (peak intensity derived from the fluororubber (A))/(peak intensity derived from the fluororesin (B))) is determined by IR analysis, respectively for projecting portions and for a part other than the projecting portions in the area having the projecting portions. In this case, the peak ratio of the components in the part other than the projecting portions should be 1.5 times or more, and preferably 2 times or more of that of the projecting portions.

With reference to the figures, the shapes of the projecting portions are described in more detail.

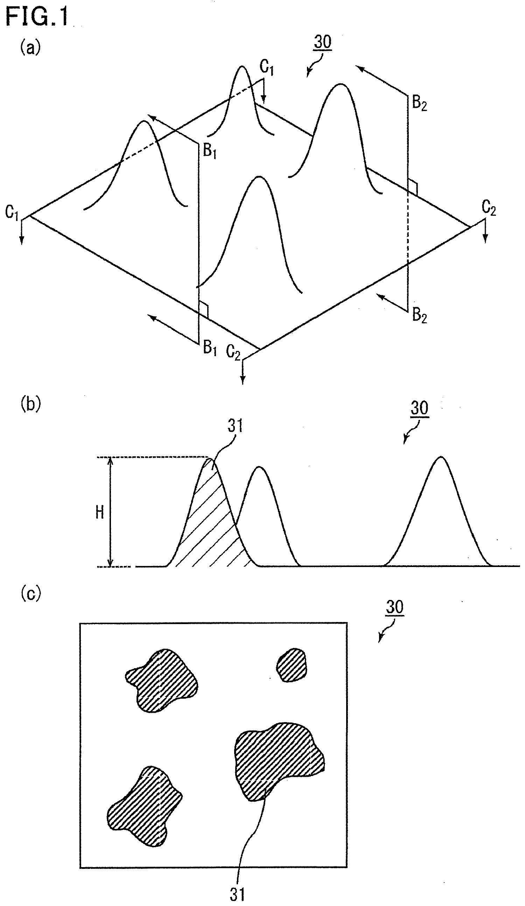

Fig. 1 (a) is a perspective view schematically showing the shapes of projecting portions of a fluororubber molded article, Fig. 1 (b) is a cross-sectional view of a projecting portion 31 taken along a plane containing lines B1 and B2 which are perpendicular to the surface shown in Fig. 1(a), and Fig. 1(c) is a cross-sectional view taken along a plane containing lines C1 and C2 which are parallel to the surface shown in Fig. 1 (a) . Figs. 1(a) to 1(c) schematically depict a micro-region of the surface of the fluororubber molded article of the present invention. As shown in Fig. 1(a) to (c), there are projecting portions 31 with, for example, a substantially conical shape (cone shape) on the surface of the fluororubber molded article of the present invention.

Herein, the heights of the projecting portions 31 refer to the heights of parts projecting from the surface of the fluororubber molded article ("H" in Fig. 1(b)). The cross-sectional areas of the bottoms of the projecting portions 31 refer to the areas of the cross sections of the projecting portions 31 taken along a plane (a plane containing lines C1 and C2) which is parallel to the surface of the fluororubber molded article (see Fig. 1 (c)).

The area ratio of the areas having the projecting portions to the entire surface of the fluororubber molded article (the occupancy of the projecting portions) is not less than 0.06 (6%). The area ratio is preferably not less than 0.15, and more preferably not less than 0.30. The area ratio of the areas having the projecting portions to the entire surface of the fluororubber molded article refers to the occupancy of the projecting portions on the cutting plane that is used to determine the cross-sectional areas of the bottoms of the projecting portions.

The volume ratio of the fluororesin (B) in the fluororubber molded article of the present invention to the fluororubber molded article is 0. 05 to 0. 45 (5 to 45% by volume) . The lower limit of the volume ratio is preferably 0.10 (10% by volume). The upper limit of the volume ratio is preferably 0. 40 (40% by volume), more preferably 0. 35 (35% by volume), and still more preferably 0.30 (30% by volume).

The fluororesin (B) is a copolymer containing polymerized units of tetrafluoroethylene and polymerized units of hexafluoropropylene, and has good heat resistance. Since the fluororesin (B) is not decomposed in the molding and crosslinking step and heat treatment step (described later), the above-mentioned volume ratio can be regarded as the same as the volume ratio of the fluororesin (B) in the crosslinkable composition.

The area ratio of the areas having the projecting portions is 1.2 times or more, preferably 1.3 times or more larger than the volume ratio of the fluororesin (B). This means that the ratio of the areas having the projecting portions to the entire surface of the fluororubber molded article of the present invention is higher than the volume ratio of the fluororesin (B) in the molded article, i.e., the volume ratio of the fluororesin (B) in the crosslinkable composition. This feature makes the fluororubber molded article of the present invention distinct from conventional fluororubber molded articles, and even when the proportional amount of the fluororesin (B) in the molded article is small, the slidability and water repellency, which cannot be afforded by the fluororubber, are improved without loss of the advantageous features of the fluororubber.

Preferably, the projecting portions have a height of 0.2 to 5.0 µm. In the case where the projecting portions have a height within this range, the fluororubber molded article has more improved low friction properties and water repellency. A more preferable height range is 0.3 to 4.0 µm, and a still more preferable height range is 0.5 to 3.0 µm.

Preferably, the projecting portions have a bottom with a cross-sectional area of 2 to 500 µm². In the case where the projecting portions have a bottom with a cross-sectional area in this range, the fluororubber molded article has more improved low friction properties and water repellency. A more preferable range of the bottom cross-sectional area is 3 to 400 µm², and a still more preferable range thereof is 3 to 300 µm².

The standard deviation of the height of the projecting portions of the fluororubber molded article of the present invention is preferably not more than 0.300. In the case where the standard deviation is within this range, the fluororubber molded article has more improved low friction properties and water repellency.

The number of projecting portions of the fluororubber molded article of the present invention is preferably 3000 to 60000 per mm². In the case where the number is within this range, the fluororubber molded article has more improved low friction properties and water repellency.

The fluororubber molded article of the present invention should have projecting portions on at least part of the surface of the fluororubber molded article, in other words, there may be an area without projecting portions on the surface of the fluororubber molded article. For example, the fluororubber molded article of the present invention may not be provided with projecting portions on an area where low friction properties and high water repellency are not required.

The crosslinkable composition preferably contains coagula formed by co-coagulation of the fluororubber (A) and the fluororesin (B). In the case where the crosslinkable composition contains coagula formed by co-coagulation of the fluororubber (A) and the fluororesin (B), the occupancy of projecting portions on the surface of the fluororubber molded article can be sufficiently increased. This allows the fluororubber molded article of the present invention to have more improved low friction properties and higher water repellency.

In the case where the crosslinkable composition contains coagula formed by co-coagulation of the fluororubber (A) and the fluororesin (B), the fluororubber (A) and the fluororesin (B) are assumed to be homogeneously dispersed in the crosslinkable composition. When this crosslinkable composition is crosslinked and subjected to a heat treatment, it is expected to be formed into a fluororubber molded article of the present invention that has low friction properties as well as high water repellency.

Because of the above-mentioned features, the entire fluororubber molded article of the present invention is excellent in non-adhesive properties, oil repellency, and elastomeric properties. In addition, because there is no clear interface between the fluororesin and the fluororubber in the fluororubber molded article, surface portions rich in the fluororesin will not fall or come off. Therefore, the fluororubber molded article of the present invention is better in terms of durability than conventional molded articles that have a fluororubber surface modified by coating with a fluororesin or adhesion of a fluororesin. The fluororubber molded article of the present invention is preferably formed by preparing the crosslinkable composition by co-coagulation of the fluororubber (A) and the fluororesin (B), and then crosslinking the crosslinkable composition.

The co-coagulation can be accomplished by, for example, (i) mixing an aqueous dispersion of the fluororubber (A) and an aqueous dispersion of the fluororesin (B), and then causing the fluororubber (A) and the fluororesin (B) to coagulate, (ii) adding powder of the fluororubber (A) to an aqueous dispersion of the fluororesin (B), and then causing the fluororubber (A) and the fluororesin (B) to coagulate, or (iii) adding powder of the fluororesin (B) to an aqueous dispersion of the fluororubber (A), and then causing the fluororubber (A) and the fluororesin (B) to coagulate. In particular, the method (i) is preferred among the above co-coagulation methods because the fluororubber (A) and the fluororesin (B) are more likely to be homogeneously dispersed.

The crosslinkable composition preferably contains co-coagulation powder obtained by co-coagulation of the fluororubber (A) and the fluororesin (B). The co-coagulation powder can be obtained by mixing an aqueous dispersion of the fluororubber (A) and an aqueous dispersion of the fluororesin (B), causing the fluororubber (A) and the fluororesin (B) to coagulate, recovering the coagula, and as desired, drying the coagula. The crosslinkable composition preferably contains a crosslinking agent in addition to the co-coagulation powder, and may further contain various additives described later. The crosslinkable composition is preferably prepared by obtaining co-coagulation powder by co-coagulation of the fluororubber (A) and the fluororesin (B), and adding a crosslinking agent to the co-coagulation powder.

### (A) Fluororubber

The fluororubber (A) typically contains an amorphous polymer that contains fluorine atoms linking to carbon atoms of the main chain and has rubber elasticity. The fluororubber (A) may contain a single polymer or two or more types of polymers.

It is preferable that the fluororubber (A) contains at least one selected from the group consisting of vinylidene fluoride (VdF)/hexafluoropropylene (HFP) copolymers, VdF/HFP/tetrafluoroethylene (TFE) copolymers, TFE/propylene copolymers, TFE/propylene/VdF copolymers, ethylene/HFP copolymers, ethylene/HFP/VdF copolymers, ethylene/HFP/TFE copolymers, VdF/TFE/perfluoro(alkyl vinyl ether)(PAVE) copolymers, and VdF/CTFE copolymers.

The fluororubber containing a vinylidene fluoride (VdF) unit (hereinafter, such a fluororubber is also referred to as a "VdF fluororubber") is described hereinbelow. The VdF fluororubber is a fluororubber at least containing a polymerization unit derived from vinylidene fluoride.

The copolymer containing a VdF unit is preferably a copolymer containing a VdF unit and a copolymerization unit (excluding the VdF unit) derived from a fluorine-containing ethylenic monomer. The copolymer containing a VdF unit preferably further contains a copolymerization unit derived from a monomer copolymerizable with VdF and a fluorine-containing ethylenic monomer.

The copolymer containing a VdF unit preferably contains 30 to 85 mol% of the VdF unit and 70 to 15 mol% of the copolymerization unit derived from a fluorine-containing ethylenic monomer, and more preferably contains 30 to 80 mol% of the VdF unit and 70 to 20 mol% of the copolymerization unit derived from a fluorine-containing ethylenic monomer. The copolymerization unit derived from a monomer copolymerizable with VdF and a fluorine-containing ethylenic monomer preferably constitutes 0 to 10 mol% of the total amount of the VdF unit and the copolymerization unit derived from a fluorine-containing ethylenic monomer.

Examples of the fluorine-containing ethylenic monomer include fluorine-containing monomers such as TFE, CTFE, trifluoroethylene, HFP, trifluoropropylene, tetrafluoropropylene, pentafluoropropylene, trifluorobutene, tetrafluoroisobutene, perfluoro(alkyl vinyl ether) (hereinafter, also referred to as PAVE), and vinyl fluoride. Among these, at least one selected from the group consisting of TFE, HFP, and PAVE is preferable.

As preferred examples of PAVE, there may be mentioned at least one selected from the group consisting of those represented by the formula (1):

CF₂=CFO(CF₂CFY¹O)ₚ-(CF₂CF₂CF₂O)_{q}-R^{f} (1)

(wherein Y¹ is F or CF₃; R^{f} is C₁ to C₅ perfluoroalkyl; p is an integer of 0 to 5; and q is an integer of 0 to 5), and those represented by the formula (2):

CFX=CXOCF₂OR¹ (2)

(wherein X is H, F, or CF₃; R¹ is linear or branched C₁ to C₆ fluoroalkyl or C₅ or C₆ cyclic fluoroalkyl).

R¹ in formula (2) may be a fluoroalkyl group containing one or two atoms selected from the group consisting of H, Cl, Br, and I.

The PAVE is preferably perfluoro(methyl vinyl ether) or perfluoro(propyl vinyl ether), and is more preferably perfluoro (methyl vinyl ether). Each of these may be used alone or in any combination.

Examples of the monomer copolymerizable with VdF and a fluorine-containing ethylenic monomer include ethylene, propylene, and alkyl vinyl ether.

Specific preferable examples of such a copolymer containing a VdF unit include one or two or more copolymers such as VdF/HFP copolymers, VdF/HFP/TFE copolymers, VdF/CTFE copolymers, VdF/CTFE/TFE copolymers, VdF/PAVE copolymers, VdF/TFE/PAVE copolymers, VdF/HFP/PAVE copolymers, and VdF/HFP/TFE/PAVE copolymers. Among these copolymers containing a VdF unit, VdF/HFP copolymers and VdF/HFP/TFE copolymers are particularly preferable from the viewpoints of heat resistance, compression set, processability, and cost.

The VdF/HFP copolymer preferably has a molar ratio VdF/HFP of 45 to 85/55 to 15, more preferably 50 to 80/50 to 20, and still more preferably 60 to 80/40 to 20.

The VdF/HFP/TFE copolymer preferably has a molar ratio VdF/HFP/TFE of 40 to 80/10 to 35/10 to 35.

The VdF/PAVE copolymer preferably has a molar ratio VdF/PAVE of 65 to 90/10 to 35.

The VdF/TFE/PAVE copolymer preferably has a molar ratio VdF/TFE/PAVE of 40 to 80/3 to 40/15 to 35.

The VdF/HFP/PAVE copolymer preferably has a molar ratio VdF/HFP/PAVE of 65 to 90/3 to 25/3 to 25.

The VdF/HFP/TFE/PAVE copolymer preferably has a molar ratio VdF/HFP/TFE/PAVE of 40 to 90/0 to 25/0 to 40/3 to 35, and more preferably 40 to 80/3 to 25/3 to 40/3 to 25.

The fluororubber (A) is also alternatively preferably a copolymer containing a copolymerization unit derived from a cross-linking-site-imparting monomer. Examples of the cross-linking-site-imparting monomer include iodine-containing monomers such as perfluoro(6,6-dihydro-6-iodo-3-oxa-1-hexene) and perfluoro(5-iodo-3-oxa-1-pentene) described in JP-B H05-63482 and JP-A H07-316234, bromine-containing monomers described in JP-T H04-505341, cyano group-containing monomers, carboxyl group-containing monomers, and alkoxycarbonyl group-containing monomers described in JP-T H04-505345 and JP-T H05-500070. Among these cross-linking-site-imparting monomers, cyano group-containing monomers are preferable.

Or, the fluororubber (A) preferably contains a fluororubber with an iodine or bromine terminated main chain. Such a fluororubber with an iodine or bromine terminated main chain can be prepared by emulsion polymerization of monomers which can be initiated by adding a radical initiator in a water medium substantially in the absence of oxygen and in the presence of a halogen compound. Representative examples of usable halogen compounds include compounds represented by the formula:

R²IₓBr_{y}

(wherein x and y are each an integer of 0 to 2, and satisfy the relationship of 1≦x+y≦2; R² is saturated or unsaturated C₁ to C₁₆ fluorohydrocarbon, saturated or unsaturated C1 to C₁₆ chlorofluorohydrocarbon, C₁ to C₃ hydrocarbon, or C₃ to C₁₀ cyclic hydrocarbon optionally substituted with iodine atoms or bromine atoms, and may contain oxygen atoms).

Examples of halogen compounds include 1,3-diiodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodine perfluoroethane, 1-bromo-3-iodine perfluoropropane, 1-bromo-4-iodine perfluorobutane, 2-bromo-3-iodine perfluorobutane, 3-bromo-4-iodine perfluorobutene-1, 2-bromo-4-iodine perfluorobutene-1, monoiodo-substituted and monobromo-substituted benzenes, diiodo-substituted and monobromo-substituted benzenes, and (2-iodoethyl)-substituted and (2-bromoethyl)-substituted benzenes. Any of these compounds may be used alone, or any combination of these may be used.

Among these, 1,4-diiodoperfluorobutane or diiodomethane are preferable from the viewpoints of polymerization reactivity, cross-linking reactivity, and easy availability.

The fluororubber (A) preferably has a Mooney viscosity (ML₁₊₁₀ (100°C)) of 5 to 140, more preferably 10 to 120, and still more preferably 20 to 100, from the viewpoint of good processability.

The fluororubber (A) is a crosslinkable system, selected from the group consisting of peroxide crosslinkable systems and polyol crosslinkable systems.

A peroxide crosslinkable system is preferable in terms of chemical resistance, and a polyol crosslinkable system is preferable in terms of heat resistance. Therefore, the crosslinkable composition may contain crosslinking agents that are used for these crosslinkable systems.

The peroxide cross-linking can be performed when a peroxide-crosslinkable Fluororubber and an organic peroxide as the cross-linking agent are used.

The peroxide-crosslinkable fluororubber is not particularly limited, and any fluororubber having a peroxide-crosslinkable moiety may be used. The peroxide-crosslinkable moiety is not particularly limited, and examples thereof include moieties containing iodine atoms, and moieties containing bromine atoms.

The organic peroxide may be any organic peroxide, provided that it can generate peroxy radicals easily in the presence of heat or a redox system. Examples thereof include 1,1-bis(t-butylperoxy)-3,5,5-trimethylcyclohexane, 2,5-dimethylhexane-2,5-dihydroperoxide, di-t-butyl peroxide, t-butylcumyl peroxide, dicumyl peroxide, α,α-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butylperoxybenzene, t-butylperoxy maleic acid, t-butylperoxyisopropyl carbonate, and t-butylperoxybenzoate. Among these, 2,5-dimethyl-2,5-di(t-butylperoxy)hexane and 2,5-dimethyl-2,5-di(t-butylperoxy)-hexyne-3 are preferable.

The peroxide crosslinkable system preferably contains such an organic peroxide in an amount of 0.01 to 10 parts by mass relative to 100 parts by mass of the peroxide crosslinkable fluororubber. With the use of the organic peroxide in an amount within this range, it is possible to allow peroxide crosslinking to proceed to a sufficient extent. The amount is more preferably 0.1 to 5.0 parts by mass.

In the case of an organic peroxide being used as crosslinking agent, it is preferable that the crosslinkable composition of the present invention further contains a crosslinking aid. As the crosslinking aid, there may be mentioned, for example, triallyl cyanurate, triallyl isocyanurate (TAIC), triacrylformal, triallyl trimellitate, N,N'-m-phenylene bismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4, 6-trione), tris(diallylamine)-s-triazine, N,N-diallylacrylamide, 1,6-divinyldodecafluorohexane, hexallylphosphoramide, N,N,N',N'-tetraallylphthalamide, N,N,N',N'-tetraallyl malonamide, trivinyl isocyanurate, 2,4,6-trivinylmethyltrisiloxane, tri(5-norbornene-2-methylene) cyanurate, and triallyl phosphite. Among these, triallyl isocyanurate (TAIC) is preferable for the purpose of achieving good cross-linkability and ensuring good physical properties of the fluororubber molded article.

The amount of the crosslinking aid is preferably 0.01 to 10 parts by mass, and more preferably 0.1 to 5.0 parts by mass relative to 100 parts by mass of the fluororubber (A). If the amount of the crosslinking aid is less than 0.01 parts by mass, the crosslinking may take a long time over the practical limit. If the amount is more than 10 parts by mass, the crosslinking may finish in too short a time, and additionally, the fluororubber molded article tends to have a reduced compression set.

The polyol cross-linking can be performed when a polyol-crosslinkable fluororubber and a polyhydroxy compound as the cross-linking agent are used.

The polyol-crosslinkable fluororubber is not particularly limited, and any fluororubber having a polyol-crosslinkable moiety may be used. The polyol-crosslinkable moiety is not particularly limited, and examples thereof include moieties having a vinylidene fluoride (VdF) unit. Examples of the method of introducing the crosslinkable moiety include a method of copolymerizing crosslinking-site-imparting monomers when the fluororubber is polymerized.

As a polyhydroxy compound, a polyhydroxy aromatic compound is suitably used from the viewpoint of excellent heat resistance.

The polyhydroxy aromatic compound is not particularly limited, and examples thereof include 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenylsulfone, 4,4'-dihydroxydiphenyl ketone, tri(4-hydroxyphenyl)methane, 3,3',5,5'-tetrachlorobisphenol A, and 3,3',5,5'-tetrabromobisphenol A. These polyhydroxy aromatic compounds may be metal salts such as alkali metal salts and alkaline earth metal salts, but these metal salts are preferably not used in the case of coagulating the copolymer with use of an acid.

The polyol crosslinkable system preferably contains the polyhydroxy compound in an amount of 0.01 to 8 parts by mass relative to 100 parts by mass of the polyol crosslinkable fluororubber. With the use of the polyhydroxy compound in an amount within this range, it is possible to allow polyol crosslinking to proceed to a sufficient extent. The amount is more preferably 0.02 to 5 parts by mass.

In the case of a polyhydroxy compound being used as a crosslinking agent, it is preferable that the crosslinkable composition further contains a crosslinking promoter. The crosslinking promoter accelerates the formation of intramolecular double bonds via the dehydrofluorination reaction of the main chain of the polymer and the addition of the polyhydroxy compound to the resulting double bonds.

The crosslinking promoter may be used in combination with an acid acceptor such as magnesium oxide and a crosslinking aid such as calcium hydroxide.

Examples of the cross-linking accelerator include onium compounds. Preferable among the onium compounds is at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds. Among these, at least one selected from the group consisting of quaternary ammonium salts and quaternary phosphonium salts is more preferable.

The quaternary ammonium salts are not particularly restricted, and mention may be made, for example, of 8-methyl-1,8-diazabicyclo[5,4,0]-7-undecenium chloride, 8-methyl-1,8--diazabicyclo[5,4,0]-7-undecenium iodide, 8-methyl-1,8--diazabicyclo[5,4,0]-7-undecenium hydroxide, 8-methyl-1,8--diazabicyclo[5,4,0]-7-undecenium methylsulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter, referred to as "DBU-B"), 8-benzyl-1,8-diazabicyclo[5,4,0]-7-undecenium hydroxide, 8-phenethyl-1,8-diazabicyclo[5,4,0]-7-undecenium chloride, and 8-(3-phenylpropyl)-1,8-diazabicyclo[5,4,0]-7-undecenium chloride. Among these, DBU-B is preferable for the purpose of achieving good cross-linkability and ensuring good physical properties of the fluororubber molded article.

The quaternary phosphonium salts are not particularly restricted, and mention may be made, for example, of tetrabutylphosphonium chloride, benzyltriphenylphosphonium chloride (hereinafter referred to as "BTPPC"), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Among these, benzyltriphenylphosphonium chloride (BTPPC) is preferable for the purpose of achieving good cross-linkability and ensuring good physical properties of the fluororubber molded article.

Other examples of the crosslinking promoter include solid solutions of quaternary ammonium salts with bisphenol AF, solid solutions of quaternary phosphonium salts with bisphenol AF, and the chlorine-free crosslinking promoters disclosed in JP-A H11-147891.

The crosslinking promoter is preferably used in an amount of 0.01 to 8 parts by mass, more preferably 0.02 to 5 parts by mass, relative to 100 parts by mass of the fluororubber (A). The use of the crosslinking promoter in an amount of less than 0.01 parts by mass may not allow the fluororubber to crosslink to a sufficient extent, whereby the resulting fluororubber molded article tends to have reduced thermal stability and oil resistance. If the amount is more than 8 parts by mass, the moldability/processability of the crosslinkable composition tends to be lowered.

### (B) Fluororesin

The fluororesin (B) is a tetrafluoroethylene/hexafluoropropylene copolymer, i.e. a copolymer containing polymerized units of tetrafluoroethylene and polymerized units of hexafluoropropylene (hereinafter, also referred to as "FEP"). FEP is a preferable material because it has a good effect of reducing the friction coefficient of the fluororubber molded article and is remarkably compatible with the fluororubber (A).

Another reason why FEP is preferable is that it provides very good heat resistance, and additionally good fuel barrier performance to the fluororubber molded article. The FEP is preferably a copolymer containing 70 to 99 mol% of TFE units and 1 to 30 mol% of HFP units, and more preferably a copolymer containing 80 to 97 mol% of TFE units and 3 to 20 mol% of HFP units. If the amount of TFE units is less than 70 mol%, mechanical properties may be reduced. If the amount is more than 99 mol%, the copolymer may have too high a melting point, and may adversely affect the moldability.

FEP may be a copolymer of TFE, HFP and a monomer copolymerizable with TFE and HFP. Examples of the monomer include perfluoro(alkyl vinyl ether) [PAVE] represented by CF₂=CF-OR_{f}⁶ (wherein R_{f}⁶ represents a C1 to C5 perfluoroalkyl group), vinyl monomers represented by CX⁵X⁶=CX⁷ (CF₂)ₙX⁸ (wherein X⁵, X⁶, and X⁷ are the same as or different from each other and each of these is a hydrogen atom or a fluorine atom, X⁸ represents a hydrogen atom, a fluorine atom, or a chlorine atom, and n represents an integer of 2 to 10), and alkyl perfluorovinyl ether derivatives represented by CF₂=CF-OCH₂-Rf⁷ (wherein Rf⁷ represents a C1 to C5 perfluoroalkyl group). Among these, PAVE is preferable.

The PAVE is preferably at least one selected from the group consisting of perfluoxo(methyl vinyl ether) [PMVE], perfluoro(ethyl vinyl ether) [PEVE], perfluoro(propyl vinyl ether) [PPVE], and perfluoro(butyl vinyl ether), and is more preferably at least one selected from the group consisting of PMVE, PEVE, and PPVE.

The alkyl perfluorovinyl ether derivative is preferably one in which Rf⁷ is a C1 to C3 perfluoroalkyl group, and more preferably CF₂=CF-OCH₂-CF₂CF₃.

In the case where the FEP contains monomer units of a monomer copolymerizable with TFE and HFP, it is preferable that the amount of monomer units of a monomer copolymerizable with TFE and HFP is 0.1 to 10 mol% and the total amount of TFE units and HFP units is 90 to 99. 9 mol%. If the amount of monomer units of a copolymerizable monomer is less than 0.1 mol%, the moldability, environmental stress cracking resistance, and stress cracking resistance tend to be poor. If the amount is more than 10 mol%, chemical impermeability, heat resistance, mechanical properties, and productivity tend to be poor.

The melting point of the fluororesin (B) is preferably not lower than the crosslinking temperature of the fluororubber (A). Provided that the fluororesin (B) has a melting point of not lower than the crosslinking temperature of the fluororubber (A), the melting point is more preferably, for example, not lower than 150°C, and still more preferably not lower than 200°C although the preferable range varies depending on the type of the fluororubber (A). The upper limit is not particularly limited, and may be set to 300°C. If a low-melting point fluororesin such as polyvinylidene fluoride is used as the fluororesin (B), the fluororesin may melt in the process of crosslinking molding. Consequently, a fluororubber molded article with enough projecting portions may not be obtained.

In order to improve the compatibility of the fluororesin (B) and the fluororubber (A), the crosslinkable composition may contain at least one polyfunctional compound. The term "polyfunctional compound" means a compound having at least two functional groups of the same structure or different structures in its molecule.

The functional groups of such polyfunctional compounds may be any of functional groups commonly known to be reactive, and examples include carbonyl, carboxyl, haloformyl, amido, olefin, amino, isocyanate, hydroxyl, and epoxy. Compounds having these functional groups have high affinity for the fluororubber (A), and additionally are expected to improve the compatibility because they react with a functional group of the fluororesin (B) which is known to be reactive.

The crosslinkable composition containing the fluororubber (A) and the fluororesin (B) preferably has a volume ratio of the fluororubber (A) to the fluororesin (B) (fluororubber (A))/(fluororesin (B)) of 60/40 to 95/5. If the amount is too low, the fluororesin (B) may not have a sufficient effect of reducing the friction coefficient. On the other hand, if the amount is too high, the fluororesin (B) may strikingly reduce the rubber elasticity. The ratio (fluororubber (A))/(fluororesin (B)) is more preferably 65/35 to 95/5 and still more preferably 70/30 to 90/10 in terms of providing both good flexibility and good low friction properties.

The crosslinkable composition may optionally contain compounding agents commonly used in fluororubbers, including various additives such as fillers, processing aids, plasticizers, colorants, stabilizers, adhesive aids, mold release agents, electric conductivity imparting agents, thermal conductivity imparting agents, surface non-adhesive agents, flexibility imparting agents, heat resistance improvers, and flame retardants, to the extent that the effects of the present invention are not deteriorated.

The following description is offered to illustrate a method for producing the fluororubber molded article of the present invention.

The fluororubber molded article of the present invention can be produced by a production method including the steps of:
(I) causing the fluororubber (A) and the fluororesin (B) to co-coagulate to prepare a crosslinkable composition; (II) molding and crosslinking the crosslinkable composition, thereby providing a crosslinked molding; and (III) heating the crosslinked molding to a temperature of not lower than the melting point of the fluororesin (B), thereby providing a fluororubber molded article (heat treatment).

These steps are described hereinafter.

### Step (I)

In this step, the fluororubber (A) and the fluororesin (B) are co-coagulated to prepare a crosslinkable composition. As a result of the co-coagulation, the fluororubber (A) and the fluororesin (B) become mixed, which leads to a high occupancy of projecting portions on the surface of the fluororubber molded article. Consequently, the fluororubber molded article of the present invention has high water repellency and low friction properties.

On the other hand, if the fluororubber (A) and the fluororesin (B) are kneaded, for example, at a temperature at which the fluororesin (B) melts to prepare a crosslinkable composition containing the fluororubber (A) and the fluororesin (B), the occupancy of projecting portions on the surface of a resulting fluororubber molded article will not be sufficiently high.

The co-coagulation may be carried out by, for example, (i) a method including mixing an aqueous dispersion of the fluororubber (A) and an aqueous dispersion of the fluororesin (B), and then causing the fluororubber (A) and the fluororesin (B) to coagulate, (ii) a method including adding powder of the fluororubber (A) to an aqueous dispersion of the fluororesin (B), and then causing the fluororubber (A) and the fluororesin (B) to coagulate, or (iii) a method including adding powder of the fluororesin (B) to an aqueous dispersion of the fluororubber (A), and then causing the fluororubber (A) and the fluororesin (B) to coagulate.

In particular, the method (i) is preferred among the above co-coagulation methods because the fluororubber (A) and the fluororesin (B) are more likely to be homogeneously dispersed.

In the coagulation methods (i) to (iii), a flocculant may be used to cause coagulation, for example. Examples of such a flocculant include, but are not limited to, known flocculants including aluminum salts such as aluminum sulfate and alum, calcium salts such as calcium sulfate, magnesium salts such as magnesium chloride and magnesium sulfate, and monovalent cation salts such as sodium chloride and potassium chloride. In the case of a flocculant being used for coagulation, the pH may be adjusted with an acid or an alkali in order to accelerate the coagulation.

Also, it is preferable that the step (I) includes causing the fluororubber (A) and the fluororesin (B) to co-coagulate, thereby providing co-coagulation powder, and adding a crosslinking agent to the co-coagulation powder to prepare a crosslinkable composition because the fluororubber (A) may require a crosslinking agent in the case of it being a crosslinkable system.

Typically, after the crosslinking agent is added to the co-coagulation powder, the co-coagulation powder and the crosslinking agent are mixed. The mixing can be carried out by common methods using an open roll mill or the like at a temperature of lower than the melting point of the fluororesin (B). Thus, the step (I) preferably includes causing the fluororubber (A) and the fluororesin (B) to co-coagulate, thereby providing co-coagulation powder, adding a crosslinking agent to the co-coagulation powder, and mixing the co-coagulation powder and the crosslinking agent at a temperature of lower than the melting point of the fluororesin (B), thereby providing a crosslinkable composition.

### (II) Molding and crosslinking step

In the step (II), the crosslinkable composition obtained in the step (I) is molded and crosslinked into a crosslinked molding. The order of the molding and the crosslinking is not limited, and the molding may be carried out before the crosslinking, or vice versa. Or, the molding and the crosslinking may be simultaneously carried out.

For example, in order to obtain a hose, a long plate, or the like, it is appropriate to perform extrusion molding and then crosslinking. In the case of a molded article of an irregular shape, a crosslinked product with a block shape may be obtained and then subjected to a shaping treatment such as cutting. In the case of a comparatively simple molded article such as a piston ring or an oil seal, a common strategy is to simultaneously perform molding and crosslinking using a die or the like.

Examples of molding methods include, but are not limited to, extrusion molding, compression molding using a die or the like, and injection molding.

The crosslinking can also be performed by common methods, and examples include steam crosslinking, radiation crosslinking, and methods in which the crosslinking reaction is initiated by heating. In the present invention, in order to efficiently increase the occupancy of projecting portions on the surface of the fluororubber molded article, crosslinking by heating is preferred.

The methods and conditions for molding and crosslinking the crosslinkable composition may be determined within ranges of known processes and conditions depending on the molding and crosslinking methods to be used.

Preferably, the crosslinking temperature is not lower than the crosslinking temperature of the fluororubber (A), and is lower than the melting point of the fluororesin (B). If the crosslinking is performed at a temperature of the melting point of the fluororesin (B) or higher, a molded article with a large number of projecting portions may be not obtained.

The crosslinking temperature is more preferably lower than the melting point of the fluororesin (B) by more than 5°C and not lower than the crosslinking temperature of the fluororubber (A). The time of crosslinking is, for example, 1 minute to 24 hours, and can be appropriately determined depending on the type of the crosslinking agent.

Although some conventional rubber crosslinking processes include a first crosslinking treatment (referred to as first crosslinking) and a post-crosslinking step (referred to as second crosslinking), the molding and crosslinking step (II) and the heat treatment step (III) in the present invention are different from the conventional second crosslinking step as illustrated below in the description of the heat treatment step (III).

### (III) Heat treatment step

In this step, the crosslinked molding obtained in the molding and crosslinking step (II) is formed into a fluororubber molded article by heating at a temperature of not lower than the melting point of the fluororesin (B).

The heat treatment step (III) herein is a treatment for increasing the fluororesin ratio on the surface of the crosslinked molding. In order to achieve this object, the heating temperature is not lower than the melting point of the fluororesin (B), and lower than the thermal decomposition temperatures of the fluororubber (A) and the fluororesin (B).

If the heating temperature is lower than the melting point of the fluororesin, a molded article with a large number of projecting portions may be not obtained. Additionally, in order to prevent thermal decomposition of the fluororubber and the fluororesin, the heating temperature should be lower than the lower one of the thermal decomposition temperature of the fluororubber (A) and the thermal decomposition temperature of the fluororesin (B). The heating temperature is preferably higher than the melting point of the fluororesin by 5°C or more because low friction is readily achieved in a short time.

The upper limit of the temperature is determined for typical fluororubbers, and does not apply to super heat resistant fluororubbers. The upper limit for super heat resistant fluororubbers corresponds to the decomposition temperature of the fluororubbers.

In the heat treatment step (III), the heating temperature and the heating time have a close relationship. Specifically, at a temperature comparatively close to the lower limit, a comparatively long period of heating is preferably performed, while at a temperature comparatively close to the upper limit, a comparatively short period of heating is preferably performed. Although the heating time can be determined based on this relationship with the heating temperature, too long a period of heating may cause thermal deterioration of the fluororubber. Except for highly heat resistant fluororubbers, the heating time is practically up to 48 hours. Typically, the heating time is preferably 1 minute to 48 hours, and is more preferably 1 minute to 24 hours for good productivity. However, in order to sufficiently reduce the friction coefficient, the heating time is preferably 8 to 48 hours.

The conventional second crosslinking is a procedure for completely decomposing the remaining crosslinking agent after the first crosslinking to complete crosslinking of the fluororubber, and improving the mechanical properties and compression set of crosslinked molding.

Accordingly, the conventional conditions for the second crosslinking do not take into account the presence of the fluororesin (B). Therefore, even if these conditions accidentally overlap the heating conditions of the heat treatment step of the present invention, the ranges of the heating conditions of the second crosslinking are determined to achieve the goal of completing crosslinking of the fluororubber (complete decomposition of crosslinking agents) without taking into account the presence of the fluororesin, and do not always coincide with conditions under which the fluororesin (B) in a rubber crosslinked product (not a rubber uncrosslinked product) is softened or molten by heating.

In the molding and crosslinking step (II), in order to complete crosslinking of the fluororubber (A) (completely decompose the crosslinking agent), second crosslinking may be performed.

Although crosslinking of the fluororubber (A) may be completed as a result of decomposition of the remaining crosslinking agent in the heat treatment step (III), the crosslinking of the fluororubber (A) is just a secondary reaction in the heat treatment step (III).

The above-described production method provides fluororubber molded articles that are strikingly improved in terms of properties attributed to the fluororesin (B), such as low friction and water repellency, compared to articles obtained without performing a heat treatment. Additionally, the resulting fluororubber molded articles, except the surface, show good properties attributed to the fluororubber (A), and therefore are entirely excellent in low friction properties, water repellency, and elastomeric properties in a balanced manner. Additionally, since there is no clear interface between the fluororesin (B) and the fluororubber (A) in the resulting fluororubber molded articles, surface portions rich in the fluororesin (B) will not fall or come off. Namely, the molded articles are better in terms of durability than conventional molded articles that have a fluororubber surface modified by coating with a fluororesin or adhesion of a fluororesin.

The fluororubber molded article of the present invention is useful as sealing materials, slide members, and non-adhesive members because of its low friction properties and water repellency.

Examples thereof include, but not limited to, the following molded articles.

### Sealing materials:

In the fields relating to semiconductor production such as semiconductor producing devices, liquid crystal panel producing devices, plasma panel producing devices, plasma-addressed liquid crystal panels, field emission display panels, and solar battery substrates, examples of the sealing material include O(square)-rings, packings, gaskets, diaphragms, and other various sealing materials. These sealing materials can be used for CVD devices, dry etching devices, wet etching devices, oxidation diffusion devices, sputtering devices, ashing devices, washing devices, ion implanting devices, and gas discharging devices. Specific examples of the sealing material include O-rings for gate valves, O-rings for quartz windows, O-rings for chambers, O-rings for gates, O-rings for bell jars, O-rings for couplings, O-rings and diaphragms for pumps, O-rings for semiconductor gas control devices, O-rings for resist developers and peeling liquids, and other various sealing materials.

In the field of automobiles, the fluororubber molded article can be used as sealing materials such as gaskets, shaft seals, valve stem seals, or other various sealing materials for engines and the peripheral devices thereof, or various sealing materials for automatic transmissions.
Examples of the sealing material for fuel systems and the peripheral devices thereof include O(square)-rings, packings, and diaphragms. Specific examples thereof include engine head gaskets, metal gaskets, oil pan gaskets, crankshaft seals, cam shaft seals, valve stem seals, manifold packings, seals for oxygen sensors, injector O-rings, injector packings, O-rings and diaphragms for fuel pumps, crankshaft seals, gear box seals, power piston packings, cylinder liner seals, valve stem seals, automatic transmission front pump seals, rear axle pinion seals, universal joint gaskets, speed meter pinion seals, foot brake piston cups, torque transmission O-rings, oil seals, exhaust gas recirculation system seals, bearing seals, carburetor sensor diaphragms and the like.

In the airplane, rocket and shipbuilding fields, examples of the sealing material include diaphragms, O (square)-rings, valves, packings, and other various sealing materials, and these can be used in fuel systems. Specifically, in the airplane field, the molded articles are used as jet engine valve stem seals, gaskets and O-rings, rotating shaft seals, hydraulic gaskets and fire wall seals and the like; in the shipbuilding field, the molded articles are used as screw propeller shaft stern seals, diesel engine suction and exhaust valve stem seals, butterfly valve seals, butterfly valve shaft seals and the like.

Examples of the sealing materials in the chemical plant field include valves, packings, diaphragms, O (square)-rings, and other various sealing materials, and these can be used in various steps of producing chemicals such as medicinal chemicals, agrochemicals, paints and resins. More specifically, the molded articles can be used as seals in chemical pumps, flowmeters and piping systems, heat exchanger seals, glass cooler packings in sulfuric acid production plants, seals in agrochemical spreaders and agrochemical transfer pumps, gas piping seals, plating bath seals, high-temperature vacuum drier packings, papermaking belt roller seals, fuel cell seals, wind tunnel joint seals, tube joining part packings in gas chromatographs and pH meters, and seals, diaphragms and valve parts in analytical apparatus and physical and chemical apparatus.

In the photographic field (e. g. developing machines), the printing field (e.g. printing machines) and the painting field (e.g. painting equipment), the molded articles can be used for example as seals and valve parts in dry-process copying machines.

In the food industry plant equipment field, examples of the sealing material include valves, packings, diaphragms, O (square)-rings and various sealing materials, and these can be used in food production steps. More specifically, the molded articles can be used as plate type heat exchanger seals, and vending machine electromagnetic valve seals.

In the nuclear power plant equipment field, examples of the sealing material include packings, O-rings, diaphragms, valves, and various seal members.

Examples in the general industry field include packing members, O-rings, diaphragms, valves, various sealing materials, and the like. More specifically, there may be mentioned seals and bearing seals in hydraulic and lubricating systems, window seals and other seals in dry cleaning equipment, seals for uranium hexafluoride enrichment apparatus, seal (vacuum) valves in cyclotrons, seals for automatic packaging machines, diaphragms in pumps (in pollution-monitoring apparatus) for analyzing sulfurous acid gas and chlorine gas in air, and so forth.

In the electric system field, the molded articles are specifically used as bullet train (Shinkansen) insulating oil caps, liquid-sealed transformer benching seals and the like.

In the fuel cell field, the articles are specifically used as seal materials between electrodes and a separator and as seals in hydrogen, oxygen or product water piping systems.

In the electronic component field, the articles are specifically used as radiator materials, electromagnetic wave shield materials, computer hard disk drive gaskets and the like.

Examples of those which can be produced by in-situ molding are not particularly restricted but include engine oil pan gaskets, gaskets for magnetic recording apparatus, and filter unit sealants for clean rooms.

The molded articles can be particularly suitably used as gaskets for magnetic recording apparatus (hard disk drives) and sealing materials for clean equipment such as sealing materials in semiconductor manufacturing apparatus or storehouses for wafers or other devices.

Further, the molded articles are particularly suitably used as sealing materials for fuel cells, such as packings used between fuel cell electrodes or in peripheral piping systems.

### Slide members:

In the automobile-related fields, examples of the sealing materials include piston rings, shaft seals, valve stem seals, crankshaft seals, cam shaft seals, and oil seals. Generally, the examples include fluororubber products used as parts that slide in contact with other materials.

### Non-adhesive members:

Mention may be made of, for example, hard disk crash stoppers in the computer field and rolls in the copy machine and printer fields.

### Fields utilizing water repellency and oil repellency:

Examples of the sealing material include automobile wiper blades, and coated fabrics for outdoor tents.

### EXAMPLES

The following examples are offered to illustrate the present invention in more detail.

The physical properties reported herein were measured by the following methods.

### (1) Crosslinking (vulcanization) properties

The lowest torque (ML), highest torque (MH), induction time (T10) and optimum vulcanization time (T90) were measured using a type II curastometer (available from JSR Corporation)

### (2) 100% modulus (M100)

Measured in accordance with JIS K 6251.

### (3) Tensile strength at break (Tb)

Measured in accordance with JIS K 6251.

### (4) Tensile elongation at break (Eb)

Measured in accordance with JIS K 6251.

### (5) Hardness (shore A)

Measured in accordance with JIS K 6253 using a type A durometer (peak value).

### (6) Friction coefficient

A friction player (FPR2000, available from Rhesca Corporation) was used for the measurement in a revolution mode at 20 g of weight, at 60 rpm and at 10 mm of radius of gyration. When the friction coefficient became stable 5 minutes or more after the start of rotation, the measured value was recorded as a coefficient of dynamic friction.

### (7) Occupancy of areas having the projecting portions (occupancy of projecting portions)

An arbitrary region (270 µm × 202 µm) on the surface of a molded article was analyzed with a color 3D laser microscope (VK-9700, available from Keyence Corporation) to determine the bottom cross-sectional areas of projecting portions, and the occupancy was calculated as the proportion of the total of the cross-sectional areas to the area of the entire measured region. The software used for the laser microscopic analysis was WinRooF Ver. 6.4.0 (available from Mitani Corporation).

### (8) Projecting portion height

An arbitrary region (270 µm × 202 µm) on the surface of a molded article was analyzed with a color 3D laser microscope (VK-9700, available from Keyence Corporation) to determine the heights of projecting portions and the standard deviation of the projecting portion height. The software used for the laser microscopic analysis was WinRooF Ver.6.4.0 (available from Mitani Corporation).

### (9) Bottom cross-sectional area of projecting portions

An arbitrary region (270 µm × 202 µm) on the surface of a molded article was analyzed with a color 3D laser microscope (VK-9700, available from Keyence Corporation) to determine the bottom cross-sectional areas of projecting portions. The software used for the laser microscopic analysis was WinRooF Ver.6.4.0 (available from Mitani Corporation).

### (10) Number of projecting portions

An arbitrary region (270 µm × 202 µm) on the surface of a molded article was observed with a color 3D laser microscope (VK-9700, available from Keyence Corporation), and the number of projecting portions in the region was converted to the number of projecting portions per mm². The software used for the laser microscopic analysis was WinRooF Ver.6.4.0 (available from Mitani Corporation).

### (11) Water repellency

Measured as a static contact angle of water on a fluororubber molded article using a contact angle meter (available from Kyowa Kagaku).

Materials shown in Tables and used herein are described below.

### Fluororubber dispersion (A1)

Dispersion of a polyol crosslinkable binary fluororubber (VdF/HFP copolymer, VdF/HFP = 78/22) (solids content: 24% by mass, Mooney viscosity of the fluororubber (ML₁₊₁₀ (100°C) : 80)

### Fluororubber dispersion (A2)

Dispersion of a polyol crosslinkable binary fluororubber (VdF/HFP copolymer, VdF/HFP = 78/22) (solids content: 23% by mass, Mooney viscosity of the fluororubber (ML₁₊₁₀ (100°C) : 60)

### Fluororubber (A3)

Dispersion of a polyol crosslinkable binary fluororubber (G7400BP, available from Daikin Industries, Ltd.)

### Fluororesin dispersion (B1)

FEP aqueous dispersion (solids content: 21% by mass, MFR: 31.7 g/10 min (measured at 327°C), melting point: about 215°C)

### Fluororesin (B2)

ETFE (EP-610, available from Daikin Industries, Ltd.)

### Filler

Carbon black (MT carbon from Cancarb: N990)

### Crosslinking agent

Bisphenol AF of special grade (available from Wako Pure Chemical Industries, Ltd.)

### Crosslinking promoter

BTPPC of special grade (available from Wako Pure Chemical Industries, Ltd.)

### Acid acceptor

Magnesium oxide (available from Kyowa Chemical Industry Co., Ltd.)

### Crosslinking aid

Calcium hydroxide (available from Ohmi Chemical Industry Co., Ltd.)

### Example 1

The FEP aqueous dispersion (B1) and the fluororubber dispersion (A1) were preliminary mixed into a solution with a volume ratio (fluororubber solids/FEP solids) of 75/25. A 400 mL portion of this solution was added to a preliminary prepared solution of 4 g magnesium chloride in 500 mL of water in a 1-L mixer and mixed therein for 5 minutes to cause the solids to co-coagulate.

After the co-coagulation, the solids were recovered, and dried in a drying kiln at 120°C for 24 hours, and predetermined materials shown in Table 1 were mixed with the solids using an open roll mill.

Thereafter, the resulting composition was subjected to heating molding at 170°C for 10 minutes, and then a heat treatment in an oven at 250°C for 24 hours to be completely vulcanized.

### Example 2

The FEP dispersion (B1) and the fluororubber aqueous dispersion (A2) were preliminary mixed into a solution with a volume ratio (fluororubber solids/FEP solids) of 75/25. A 400 mL portion of this solution was added to a preliminary prepared solution of 4 g magnesium chloride in 500 mL of water in a 1-L mixer and mixed therein for 5 minutes to cause the solids to co-coagulate.

After the co-coagulation, the solids were recovered, and dried in a drying kiln at 120°C for 24 hours, and predetermined materials shown in Table 1 were mixed with the solids using an open roll mill.

Thereafter, the resulting composition was subjected to heating molding at 170°C for 10 minutes, and then the heat treatment in an oven at 250°C for 24 hours to be completely vulcanized.

### Comparative Example 1

The fluororubber (A3) and the fluororesin (B2) were prepared at a volume ratio of 75/25 in a 3-L kneader at a fill percentage of 80%, and kneaded.

When the temperature of the composition became 235°C, the kneading was stopped and the composition was taken out.

Thereafter, predetermined materials shown in Table 1 were mixed therewith using an open roll mill, and the resulting composition was subjected to heating molding at 170°C for 10 minutes and then the heat treatment in an oven at 250°C for 24 hours to be completely vulcanized.

Table 1 below shows the blending ratios and measurements of vulcanization properties of the crosslinkable fluororubber compositions. Table 2 below shows various measurements of the obtained molded articles.

**[Table 1]**

| | Example 1 | Example 2 | Comparative Example 1 |
|---|---|---|---|
| Curable fluororubber composition (parts by mass) | - | - | - |
| Fluororubber and fluororesin | 100 | 100 | 100 |
| Bisphenol AF | 2 | 2 | 2 |
| BTPPC | 0.6 | 0.6 | 0.6 |
| MgO | 2.5 | 2.5 | 2.5 |
| Calcium hydroxide | 5 | 5 | 5 |
| Mixing of fluororubber and fluororesin | Cho-coagulation | Co-coagulation | Keading at 235°C |
| Curing (vulcanization) properties at 170°C | - | - | - |
| Lowest torque ML(N) | 3.8 | 2.8 | 2.5 |
| Highest torque MH (N) | 44.3 | 44.5 | 44.2 |
| Induction time T10 (min) | 5.1 | 4.8 | 2.9 |
| Optimum vulcanization time T90(min) | 8.9 | 7.8 | 4.5 |

**[Table 2]**

| | Example 1 | Example 2 | Example 3 |
|---|---|---|---|
| Press curing (temperature × time) | 170°C × 10 min | 170°C × 10 min | 170°C × 10 min |
| Heat treatment (temperature °C × time) | 250°C × 24 hours | 250°C × 24 hours | 250°C × 24 hours |
| M100(MPa) | 4.9 | 4.1 | 5.3 |
| Tb(MPa) | 14.1 | 13.7 | 15.9 |
| Eb(%) | 190 | 210 | 330 |
| Hardness (shore A) | 80 | 79 | 78 |
| Occupancy rate of projecting portion (%) | 38.1 | 35.6 | 24.5 |
| Area ratio/volume ratio | 1.52 | 1.42 | 0.98 |
| Height of projecting portion (µm) | 0.44 to 1.9 | 0.45 to 1.8 | 0.42 to 2.75 |
| Standard deviation of height of projecting portion | 0.281 | 0.270 | 0.303 |
| Bottom cross-sectional area of projecting portions (µm²) | 3.8 to 197.2 | 3.3 to 195.1 | 1.9 to 149.7 |
| Number of projecting portions (per mm²) | 8892 | 8526 | 8159 |
| Friction coefficient | 0.98 | 0.97 | 1.32 |
| Water repellency (contact angle) | 110° | 111° | 100° |

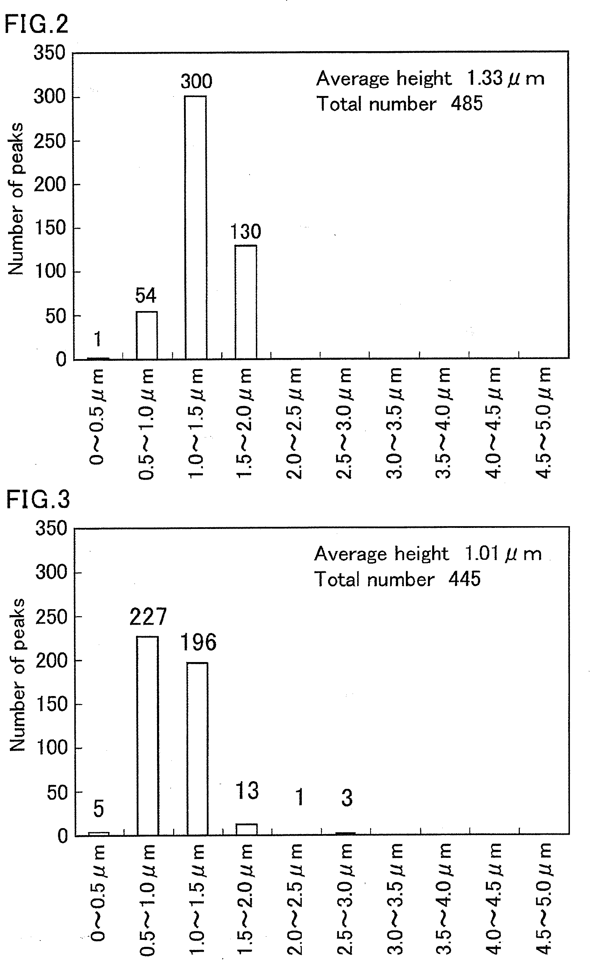

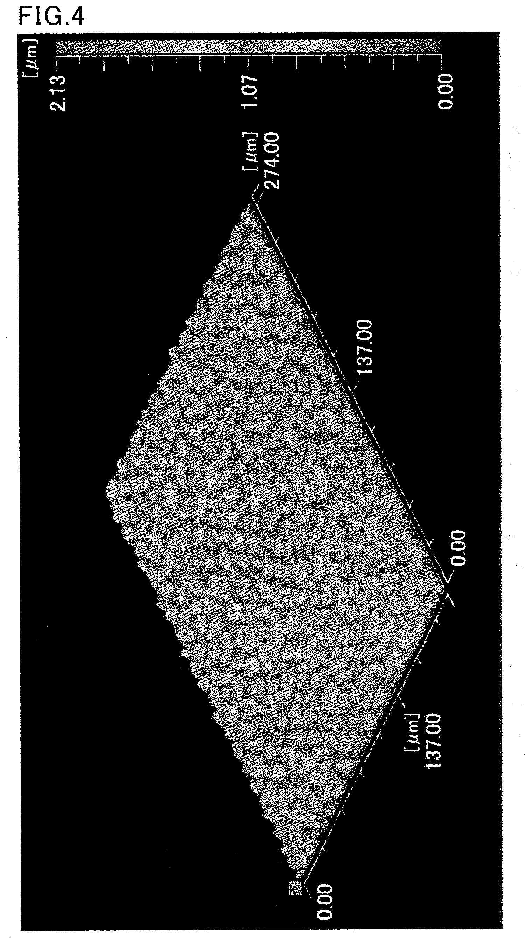

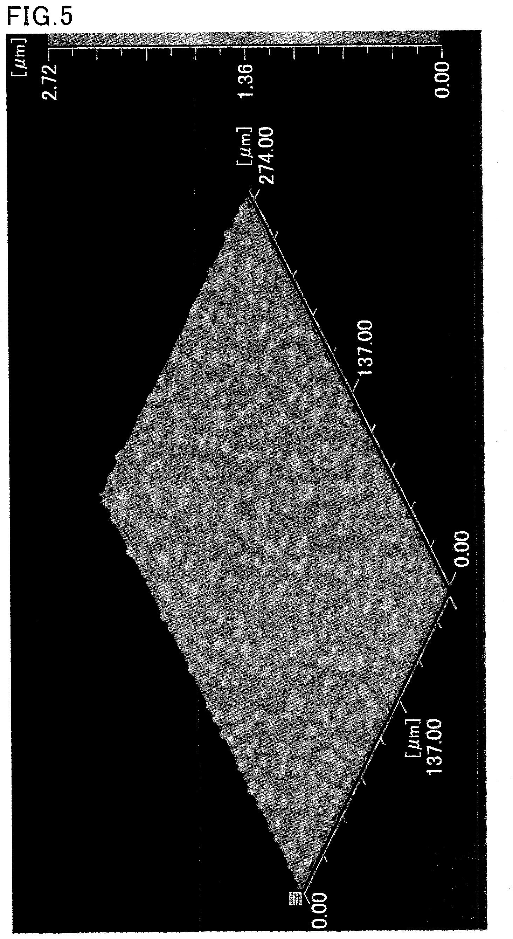

Fig. 2 is a graph showing the numbers of projecting portions of the respective projecting portion height ranges on the surface of the molded article of Example 1, and Fig. 3 is a graph showing the numbers of projecting portions of the respective projecting portion height ranges on the surface of the molded article of Comparative Example 1. Fig. 4 is an image obtained by laser microscopic analysis of the surface of the molded article of Example 1. Fig. 5 is an image obtained by laser microscopic analysis of the surface of the molded article of Comparative Example 1. As seen in these graphs and images, more uniform projecting portions are arranged on the molded article obtained in Example 1 than on the molded article of Comparative Example 1 although they were obtained from the crosslinkable compositions having the same composition.

### INDUSTRIAL APPLICABILITY

The fluororubber molded article of the present invention can be used as sealing materials, slide members, and non-adhesive members.

### REFERENCE SIGNS LIST

- 30: Fluororubber molded article
- 31: Projecting portion

## Claims

1. A fluororubber molded article produced by peroxide-crosslinking or polyol-crosslinking a crosslinkable composition comprising
(i) a fluororubber (A) and
(ii) a tetrafluoroethylene (TFE)/hexafluoropropylene (HFP) copolymer as a fluororesin (B),
wherein
- the volume ratio of the fluororesin (B) to the fluororubber molded article is 0.05-0.45,
- the fluororubber molded article has a surface with projecting portions,
- the area ratio of areas having the projecting portions to the entire surface of the fluororubber molded article is not less than 0.06, and
- the area ratio of the areas having the projecting portions is 1.2 times or more larger than the volume ratio of the fluororesin (B).

2. The fluororubber molded article of claim 1, wherein the projecting portions are substantially formed of the fluororesin (B) as a component of the crosslinkable composition.

3. The fluororubber molded article of claim 1 or 2, wherein the projecting portions have a height of 0.2-5.0 µm and a standard deviation of the height of not more than 0.300.

4. The fluororubber molded article of any of claims 1-3, wherein the projecting portions have a bottom with a cross-sectional area of 2-500 µm².

5. The fluororubber molded article of any of claims 1-4, wherein the number of the projecting portions is 3,000-60,000 per mm².

6. The fluororubber molded article of any of claims 1-5, wherein the fluororubber (A) comprises at least one selected from vinylidene fluoride (VdF)/HFP copolymers, VdF/HFP/TFE copolymers, TFE/propylene copolymers, TFE/propylene/VdF copolymers, ethylene/HFP copolymers, ethylene/HFP/VdF copolymers, ethylene/HFP/TFE copolymers, VdF/TFE/perfluoro(alkyl vinyl ether) copolymers, and VdF/chlorotrifluoroethylene copolymers.

7. The fluororubber molded article of any of claims 1-6, wherein the fluororubber molded article is a sealing material.

8. The fluororubber molded article of any of claims 1-6, wherein the fluororubber molded article is a slide member.

9. The fluororubber molded article of any of claims 1-6, wherein the fluororubber molded article is a non-adhesive member.

10. The fluororubber molded article of any of claims 1-6, wherein the surface is water and oil repellent.

## Patentansprüche

1. Fluorkautschuk-Formkörper, hergestellt durch Peroxid-Vernetzung oder Polyol-Vernetzung einer vernetzbaren Zusammensetzung, die
(i) einen Fluorkautschuk (A) und
(ii) ein Tetrafluorethylen (TFE)/Hexafluorpropylen (HFP)-Copolymer als Fluorharz (B) umfasst,
worin
- das Volumenverhältnis des Fluorharzes (B) zum Fluorkautschuk-Formkörper 0,05-0,45 ist,
- der Fluorkautschuk-Formkörper eine Oberfläche mit hervorstehenden Bereichen aufweist,
- das Flächenverhältnis von Flächen mit den hervorstehenden Bereichen zur gesamten Oberfläche des Fluorkautschuk-Formkörpers nicht kleiner als 0,06 ist,
- das Flächenverhältnis der Flächen mit den hervorstehenden Bereichen mindestens 1,2-fach größer ist als das Volumenverhältnis des Fluorharzes (B).

2. Fluorkautschuk-Formkörper gemäß Anspruch 1, worin die hervorstehenden Bereiche im Wesentlichen aus dem Fluorharz (B) als Komponente der vernetzbaren Zusammensetzung gebildet sind.

3. Fluorkautschuk-Formkörper gemäß Anspruch 1 oder 2, worin die hervorstehenden Bereiche eine Höhe von 0,2-5,0 µm und eine Standardabweichung der Höhe von nicht mehr als 0,300 aufweisen.

4. Fluorkautschuk-Formkörper gemäß mindestens einem der Ansprüche 1-3, worin die hervorstehenden Bereiche einen Boden mit einer Querschnittsfläche von 2-500 µm² aufweisen.

5. Fluorkautschuk-Formkörper gemäß mindestens einem der Ansprüche 1-4, worin die Anzahl der hervorstehenden Bereiche 3000-60000 pro mm² ist.

6. Fluorkautschuk-Formkörper gemäß mindestens einem der Ansprüche 1-5, worin der Fluorkautschuk (A) mindestens eines ausgewählt aus Vinylidenfluorid (VdF)/HFP-Copolymeren, VdF/HFP/TFE-Copolymeren, TFE/Propylen-Copolymeren, TFE/Propylen/VdF-Copolymeren, Ethylen/HFP-Copolymeren, Ethylen/HFP/VdF-Copolymeren, Ethylen/HFP/TFE-Copolymeren, VdF/TFE/perfluoralkylvinylether-Copolymeren und VdF/Chlortrifluorethylen-Copolymeren umfasst.

7. Fluorkautschuk-Formkörper gemäß mindestens einem der Ansprüche 1-6, worin der Fluorkautschuk-Formkörper ein Dichtungsmaterial ist.

8. Fluorkautschuk-Formkörper gemäß mindestens einem der Ansprüche 1-6, worin der Fluorkautschuk-Formkörper ein Schiebeelement ist.

9. Fluorkautschuk-Formkörper gemäß mindestens einem der Ansprüche 1-6, worin der Fluorkautschuk-Formkörper ein nicht-adhäsives Element ist.

10. Fluorkautschuk-Formkörper gemäß mindestens einem der Ansprüche 1-6, worin die Oberfläche wasser- und ölabweisend ist.

## Revendications

1. Article moulé en caoutchouc fluoré produit par réticulation par peroxyde ou réticulation par polyol d'une composition réticulable comprenant
(i) un caoutchouc fluoré (A) et
(ii) un copolymère de tétrafluoroéthylène (TFE)/hexafluoropropylène (HFP) en tant que résine fluorée (B),
dans lequel
- le rapport de volume de la résine fluorée (B) sur l'article moulé en caoutchouc fluoré est de 0,05 à 0,45,
- l'article moulé en caoutchouc fluoré a une surface avec des portions saillantes,
- le rapport de surface de surfaces ayant les portions saillantes sur la surface entière de l'article moulé en caoutchouc fluoré n'est pas inférieur à 0,06, et
- le rapport de surface des surfaces ayant les portions saillantes est 1,2 fois ou plus supérieur au rapport de volume de la résine fluorée (B).

2. Article moulé en caoutchouc fluoré selon la revendication 1, dans lequel les portions saillantes sont essentiellement formées de la résine fluorée (B) en tant que composant de la composition réticulable.

3. Article moulé en caoutchouc fluoré selon la revendication 1 ou 2, dans lequel les portions saillantes ont une taille de 0,2 à 5,0 µm et un écart-type de la hauteur de pas plus de 0,300.

4. Article moulé en caoutchouc fluoré selon l'une quelconque des revendications 1 à 3, dans lequel les portions saillantes ont un fond avec une aire de section transversale de 2 à 500 µm².

5. Article moulé en caoutchouc fluoré selon l'une quelconque des revendications 1 à 4, dans lequel le nombre des portions saillantes est de 3 000 à 60 000 par mm².

6. Article moulé en caoutchouc fluoré selon l'une quelconque des revendications 1 à 5, dans lequel le caoutchouc fluoré (A) comprend au moins un sélectionné parmi des copolymères de fluorure de vinylidène (FdV)/HFP, des copolymères de FdV/HFP/TFE, des copolymères de TFE/propylène, des copolymères de TFE/propylène/FdV, des copolymères d'éthylène/HFP, des copolymères d'éthylène/HFP/FdV, des copolymères d'éthylène/HFP/TFE, des copolymères de FdV/TFE/perfluoro (alkyl vinyl éther), et des copolymères de FdV/chlorotrifluoroéthylène.

7. Article moulé en caoutchouc fluoré selon l'une quelconque des revendications 1 à 6, dans lequel l'article moulé en caoutchouc fluoré est un matériau d'étanchéité.

8. Article moulé en caoutchouc fluoré selon l'une quelconque des revendications 1 à 6, dans lequel l'article moulé en caoutchouc fluoré est un membre coulissant.

9. Article moulé en caoutchouc fluoré selon l'une quelconque des revendications 1 à 6, dans lequel l'article moulé en caoutchouc fluoré est un membre non-adhésif.

10. Article moulé en caoutchouc fluoré selon l'une quelconque des revendications 1 à 6, dans lequel la surface est hydrofuge et oléofuge.
